# EUROPEAN PATENT SPECIFICATION

(11) **EP 3 107 829 B1**
(45) Date of publication and mention of the grant of the patent: **28.08.2019**
(21) Application number: 15751883.8
(22) Date of filing: 20.02.2015
(51) Int. Cl.: B65D 81/26, B65D 81/24, B65D 30/08, B65D 85/50, B65B 25/02, A01F 25/00, B65D 81/22

(54) **FRESH PRODUCE STORAGE DEVICE**
FRISCHWARENAUFBEWAHRUNGSVORRICHTUNG
DISPOSITIF DE STOCKAGE DE PRODUITS FRAIS

(30) Priority: 20.02.2014 AU 2014900539
(43) Date of publication of application: 28.12.2016
(73) Proprietor: Sway International Pty Ltd, Greenwich, New South Wales 2065 (AU)
(72) Inventor: PINI, Peita, Greenwich, New South Wales 2065 (AU)
(74) Representative: Loyer & Abello
(86) International application number: PCT/AU2015/050066
(87) International publication number: WO 2015/123731

(56) References cited:
- EP-A1- 1 418 136
- EP-A2- 1 065 155
- JP-A- H03 289 475
- US-A1- 2007 202 220
- US-A1- 2008 190 786
- US-B1- 7 841 586
- 'SIMPLE ECOLOGY ORGANIC COTTON MUSLIN PRODUCE BAG - SET OF 6 (2 EACH OF LG., MED. & SM.)' AMAZON XP055306638 Retrieved from the Internet: <URL:HTTPS://WWW.AMAZON.COM/SIMPLE-ECOLOGY- ORGANIC-COTTON-PRODUCE/DP/B004UJ0U0C>
- 'DO YOU KNOW HOW TO STORE FRESH PRODUCE?' WHO'S GREEN? 06 April 2012, XP055306657 Retrieved from the Internet: <URL:HTTP://WHOSGREENAZ.COM/2012/04/06/DO-Y OU-KNOW-HOW-TO-STORE -fresh-produce>

## Description

### Technical Field

The present invention relates to the use of a storage device for storing fresh produce such as herbs, fruit and vegetables, in a refrigerator, which is e.g. known from EP 1 418 136 A1.

### Background of the Invention

Fresh produce such as herbs, fruit and vegetables are typically stored in a refrigerator to prolong their shelf life and inhibit rotting, infestation and mould growth. The fresh produce is typically stored in a refrigerator in a crisper tray, in plastic bags, in plastic containers or simply on a shelf.

Plastic bags or containers prevent the produce from being adequately ventilated or "breathing". This can lead to an increased rate of loss of nutrients and premature rotting of the produce.

Storing the produce in a crisper tray or on a shelf provides better ventilation and allows the produce to "breathe" but increases the rate of dehydration of the produce due to the flow dry air circulating in the refrigerator and can also lead to an increased rate of loss of nutrients and premature rotting.

Some produce, such as hydroponic lettuce, can be stored with roots intact in a jar of water. This allows the produce to breathe while allowing it to draw water from the jar via its roots, helping prevent dehydration of the produce and maintaining a higher nutrient level for longer. However, produce standing in a jar of water can be difficult to store on a shelf or in a crisper tray of a refrigerator.

### Object of the Invention

It is an object of the present invention to substantially overcome or at least ameliorate one or more of the above disadvantages, or to provide a useful alternative.

### Summary of the Invention

The present invention concerns the use of a fresh product device according to claim 1.

Preferably, the first sheet and second sheet are generally rectangular and are secured along three common edges to form a rectangular pocket.

In a preferred embodiment, the storage device further comprises a flap portion formed from a water permeable material, the flap portion extending from an end of the first sheet and adapted to substantially close the opening of the pocket. Preferably, the flap portion is an extension of the first sheet.

Preferably, the storage device is adapted to be rolled into a rolled configuration with the second layer on the inside, the flap portion being adapted to wrap circumferentially around the storage device in the rolled configuration.

Optionally, the storage device further comprises a fastening mechanism adapted to fasten the storage device in the rolled configuration. The fastening mechanism may be one or more straps adapted to wrap around the storage device in the rolled configuration or alternatively, the fastening mechanism may comprise hook and loop fasteners.

In a preferred embodiment, the pocket has an opening extending substantially the width of the pocket.

The composite sheet preferably comprises two of the inner layers.

Preferably, the inner layer or inner layers is/are formed from cheesecloth. Further preferably, the cheesecloth has a thread count of 30 to 90 threads per square inch.

Preferably, the central layer is formed from cotton and/or bamboo wadding.

Preferably, the outer layer is formed from a muslin or calico fabric. Further preferably, the muslin or calico fabric has a thread count of 100 to 200 threads per square inch.

A preferable use for storing fresh produce in a refrigerator, comprises:
dousing the storage device of any one of the preceding claims with water;
placing fresh produce in the pocket of the storage device;
placing the storage device in a refrigerator.

Preferably, the use comprises the step of rolling the storage device into a rolled configuration with the second sheet on the inside before the step of placing the storage device in the refrigerator.

The use further comprises the step of intermittently pouring or sprinkling water on the storage device in the refrigerator to replenish water in the central layer of the storage device.

### Brief Description of the Drawings

A preferred embodiment of the invention will now be described by way of specific example with reference to the accompanying drawings, in which:
Fig. 1 depicts a fresh produce storage device in an open configuration;
Fig. 2 is a schematic cross-sectional view showing the different fabric layers of the fresh produce storage device of Fig. 1;
Fig. 3 depicts another fresh produce storage device in an open configuration; and
Fig. 4 depicts the storage device of Fig. 3 in a rolled configuration.

### Detailed Description of the Preferred Embodiments

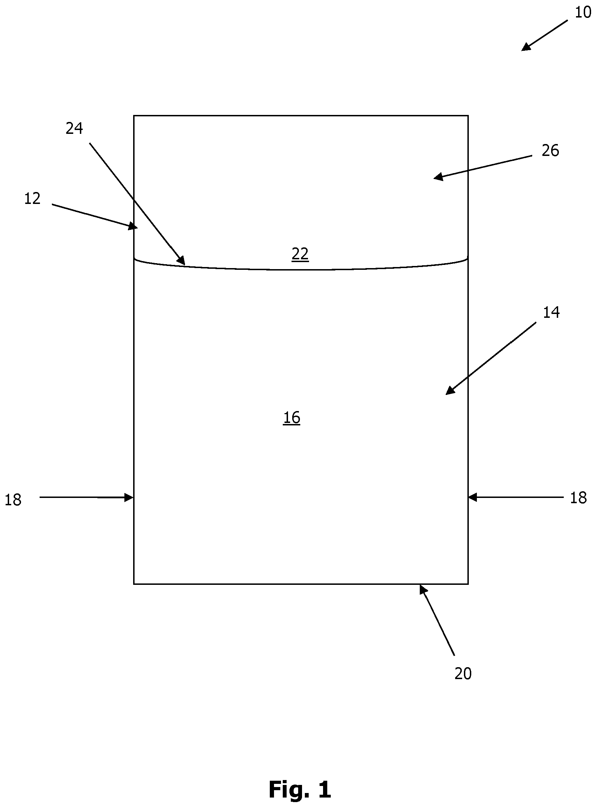

As depicted in Fig. 1, the fresh produce storage device 10 is formed having a generally rectangular first sheet 12 and a generally rectangular second sheet 14.

A pocket 16 is formed between the first sheet 12 and the second sheet 14 with the two sheets 12, 14 being stitched along the side edges 18 and bottom edge 20. The pocket 16 has an opening 22 created by the top edge 24 of the second sheet 14, which is not stitched to the first sheet 12. The opening 22 extends substantially the width of the pocket 16.

In an alternate embodiment, the pocket is formed from a single sheet that is folded back upon itself and stitched along the common side edges.

The first sheet 12 extends beyond the second sheet 14 at the top edge 24 to form a generally rectangular flap portion 26 adapted to fold over and substantially close the opening 22.

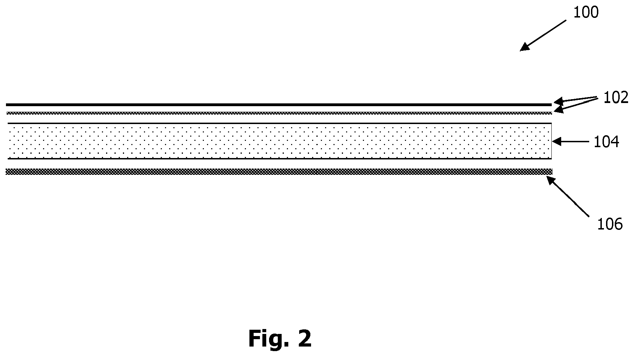

As depicted in schematic cross-section in Fig. 2, at least one of the first and second sheets 12, 14 is provided by a composite sheet 100 formed from a plurality of layers of fabric materials 102, 104, 106. The composite sheet 100 has at least one water permeable inner layer 102, a central layer 104 of water absorbent wadding, and a water permeable outer layer 106. The central layer 104 is adapted to absorb water when the storage device becomes wet and to maintain a moist environment for the stored produce, as water evaporates from the central layer 104.

As depicted in the embodiment shown in Fig. 2, the composite sheet 100 has two inner layers 102, which help maintain ventilation between the damp central layer 104 and the stored produce. This helps prevent the produce from becoming too wet, which can also increase the rate of spoiling.

The inner layers 102 are formed from a light, cotton based fabric material, such as cheesecloth, that allows free airflow between the produce and the central layer 104. Cheesecloth suitable for this application typically has a thread count of 30 to 90 threads per square inch.

The central layer 104 is formed from a water absorbent cotton and/or bamboo based wadding material that is able to absorb water and allow it to gradually evaporate over time. In certain embodiments, the central layer 104 may be a cotton blend, a bamboo blend or a cotton and bamboo blend.

The outer layer 106 is formed from a water permeable cotton based material, such as calico or muslin material. One such specific material that is appropriate is a 100% cotton fabric having a thread count of approximately 150 threads per square inch and a surface density of 100 gsm. Muslin or calico fabric suitable for this application typically has a thread count of 100 to 200 threads per square inch.

The fabrics of each layer 102, 104, 106 are preferably formed from 100% natural fibres that are unbleached and organic. This helps maintain a ventilated, moist natural environment, which allows the produce remain fresher for longer, while ensuring that the produce is not contaminated by dyes, chemicals or other hazardous substances.

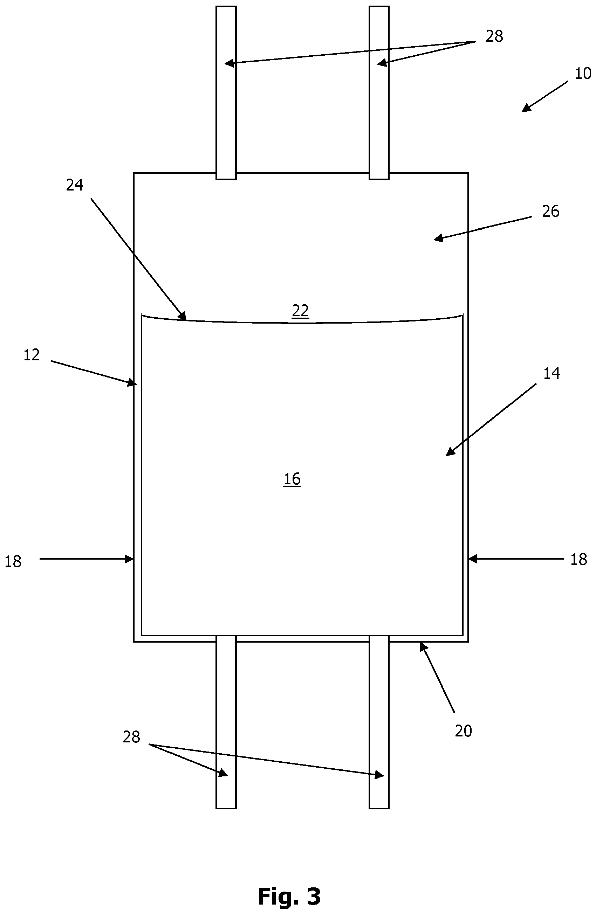

An alternate embodiment is depicted in Fig. 3, which further includes fastening mechanisms, depicted here as tie straps 28, provided on the first sheet 12. Other fastening mechanisms such as hook and loop fasteners or strap and buckle fasteners could equally be used to close the flap 26 over the storage device 10.

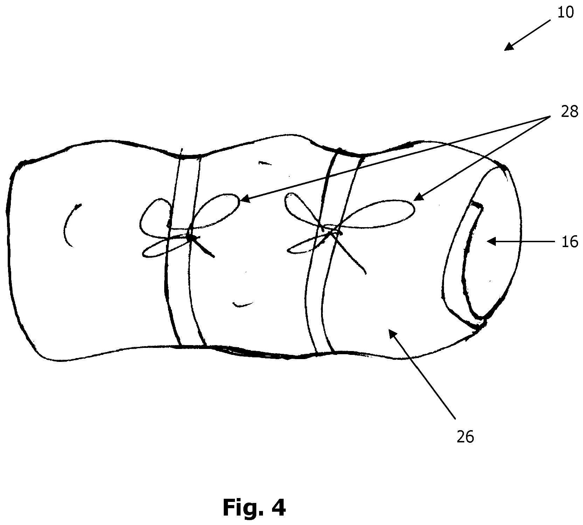

In use, the empty storage device 10 is doused with filtered water and wrung lightly to remove excess water. Fresh produce is then placed inside the pocket 16 and the storage device 10 is laid out on a flat surface with the first sheet 12 against the flat surface. The storage device 10 is then rolled with the second sheet 14 on the inside by taking the bottom edge 20 and rolling it up and over and onto the second sheet 14 and continuing to roll upwardly until the flap portion 26 wraps, at least partially, around the rolled pocket 16. As shown in Fig. 4, the tie straps 28 can be tied together to maintain the storage device 10 in the rolled configuration.

The storage device 10 is then placed in a refrigerator for storage. Once a day, or at other regular intervals, the storage device 10 is dampened with water to maintain a sufficient amount of water in the central layer 104. When the storage device 10 is dampened, the outer layer 102 allows most of the water to pass through, while the central layer 104 absorbs the water, drawing it away from the produce, while maintaining a moist environment for the produce to prevent it drying out. As the produce absorbs moisture from the air, water evaporates from the central layer 104 maintaining a moisture content in the air surrounding the produce. This keeps the produce exposed to a constant supply of fresh, moist air, which prolongs the shelf life of the produce and inhibits rotting.

In the rolled configuration, the storage device 10 visually resembles a rolled up swag, which provides an aesthetic appearance. The storage device 10 may be sized for a particular type of fresh produce and may also be coloured and/or printed with images and/or words to indicate a particular fresh produce, so that multiple storage devices can be distinguished, such as one designed for lettuce and another for herbs.

In order to clean the storage device 10, it can simply be hand washed or machine washed.

Although the invention has been described with reference to specific examples, it will be appreciated by those skilled in the art that the invention may be embodied in many other forms.

## Claims

1. Use of a fresh produce storage device (10) for containing a fresh produce including herbs, fruits or vegetables, the fresh produce storage device (10) having a pocket (16) with an opening (22) for receiving said fresh produce, the pocket (16) being formed, at least in part, from a composite sheet of material (100) comprising:
an inner layer (102) formed from a water permeable material;
a central layer (104) formed from a water absorbent wadding; and
an outer layer (106),
**characterized in that**
- the composite sheet of material (100) further comprises: at least a second inner layer formed from a water permeable material, and
- the outer layer (106) is formed from a water permeable material.

2. Use of a fresh produce storage device (10) of claim 1 wherein the pocket (16) is formed from a first sheet (12) secured to a second sheet (14), wherein at least one of the first and second sheets (12, 14) comprise said composite sheet (100).

3. Use of a fresh produce storage device (10) of claim 2 wherein both of the first and second sheets (12, 14) comprise said composite sheets (100).

4. Use of a fresh produce storage device (10) of claim 2 or 3 wherein the first sheet (12) and second sheet (14) are generally rectangular and are secured along three common edges (18, 20) to form a rectangular pocket (16).

5. Use of a fresh produce storage device (10) of any one of claims 2 to 4, further comprising a flap portion (26) formed from a water permeable material, the flap portion (26) extending from an end of the first sheet (12) and adapted to substantially close the opening (22) of the pocket (16).

6. Use of a fresh produce storage device (10) of claim 5, wherein the storage device (10) is adapted to be rolled into a rolled configuration with the second sheet (14) on the inside, the flap portion (26) being adapted to wrap circumferentially around the storage device (10) in the rolled configuration.

7. Use of a fresh produce storage device (10) of claim 6 further comprising a fastening mechanism (28) adapted to fasten the storage device (10) in the rolled configuration.

8. Use of a fresh produce storage device (10) of claim 7 wherein the fastening mechanism (28) comprises one or more straps (28) adapted to wrap around the storage device (10) in the rolled configuration.

9. Use of a fresh produce storage device (10) of any one of the preceding claims wherein the opening (22) of the pocket (16) extends substantially the width of the pocket (16).

10. Use of a fresh produce storage device (10) of any one of the preceding claims wherein the at least two inner layers (102) are formed from cheesecloth.

11. Use of a fresh produce storage device (10) of any one of the preceding claims wherein the central layer (104) is formed from cotton and/or bamboo wadding.

12. Use of a fresh produce storage device (10) of any one of the preceding claims wherein the outer layer (106) is formed from a muslin or calico fabric.

13. Use of a fresh produce storage device (10) of any one of the preceding claims, the use further comprises dousing the storage device (10) with water, and placing the storage device (10) in a refrigerator.

14. The use of claim 13 further comprising the step of:
rolling the storage device (10) into a rolled configuration with the second sheet on the inside before placing the storage device (10) in the refrigerator.

15. The use of claim 13 or 14 further comprising the step of:
intermittently dampening the storage device (10) with water to replenish water in the central layer (104) of the storage device (10).

## Patentansprüche

1. Verwendung einer Frischwarenaufbewahrungsvorrichtung (10) zum Enthalten einer Frischware, umfassend Kräuter, Obst oder Gemüse, wobei die Frischwarenaufbewahrungsvorrichtung (10) eine Tasche (16) mit einer Öffnung (22) zum Aufnehmen der genannten Frischware aufweist, wobei die Tasche (16) wenigstens teilweise aus einem Tuch aus Verbundmaterial (100) geformt ist, umfassend:
eine innere Schicht (102), die aus einem wasserdurchlässigen Material geformt ist;
eine zentrale Schicht (104), die aus einer wasserabsorbierenden Einlage geformt ist; und
eine äußere Schicht (106),
**dadurch gekennzeichnet, dass**
- das Tuch aus Verbundmaterial (100) weiterhin umfasst: wenigstens eine zweite innere Schicht, die aus einem wasserdurchlässigen Material geformt ist; und
- die äußere Schicht (106) aus einem wasserdurchlässigen Material geformt ist.

2. Verwendung einer Frischwarenaufbewahrungsvorrichtung (10) nach Anspruch 1, wobei die Tasche (16) aus einem ersten Tuch (12) geformt ist, das an einem zweiten Tuch (14) gesichert ist, wobei wenigstens eines des ersten und zweiten Tuchs (12, 14) das genannte Verbundtuch (100) umfasst.

3. Verwendung einer Frischwarenaufbewahrungsvorrichtung (10) nach Anspruch 2, wobei sowohl das erste als auch das zweite Tuch (12, 14) die genannten Verbundtücher (100) umfassen.

4. Verwendung einer Frischwarenaufbewahrungsvorrichtung (10) nach Anspruch 2 oder 3, wobei das erste Tuch (12) und das zweite Tuch (14) allgemein rechteckig sind und entlang drei gemeinsamer Kanten (18, 20) gesichert sind, um eine rechteckige Tasche (16) zu formen.

5. Verwendung einer Frischwarenaufbewahrungsvorrichtung (10) nach irgendeinem der Ansprüche 2 bis 4, weiterhin umfassend einen Klappenabschnitt (26), der aus einem wasserdurchlässigen Material geformt ist, wobei sich der Klappenabschnitt (26) von einem Ende des ersten Tuchs (12) erstreckt und geeignet ist, um die Öffnung (22) der Tasche (16) im Wesentlichen zu schließen.

6. Verwendung einer Frischwarenaufbewahrungsvorrichtung (10) nach Anspruch 5, wobei die Speichervorrichtung (10) geeignet ist, in eine gerollte Gestaltung gerollt zu sein, wobei das zweite Tuch (14) im Innern ist, wobei der Klappenabschnitt (26) geeignet ist, um umfangsgemäß um die Speichervorrichtung (10) in der gerollten Gestaltung gewickelt zu sein.

7. Verwendung einer Frischwarenaufbewahrungsvorrichtung (10) nach Anspruch 6, weiterhin umfassend einen Befestigungsmechanismus (28), der geeignet ist, um die Speichervorrichtung (10) in der gerollten Gestaltung zu befestigen.

8. Verwendung einer Frischwarenaufbewahrungsvorrichtung (10) nach Anspruch 7, wobei der Befestigungsmechanismus (28) ein oder mehrere Bänder umfasst, das / die geeignet ist / sind, sich in der gerollten Gestaltung um die Speichervorrichtung (10) zu wickeln.

9. Verwendung einer Frischwarenaufbewahrungsvorrichtung (10) nach irgendeinem der voranstehenden Ansprüche, wobei die Öffnung (22) der Tasche (16) sich im Wesentlichen über die Breite der Tasche (16) erstreckt.

10. Verwendung einer Frischwarenaufbewahrungsvorrichtung (10) nach irgendeinem der voranstehenden Ansprüche, wobei die wenigstens zwei inneren Schichten (102) aus Mulltuch geformt sind.

11. Verwendung einer Frischwarenaufbewahrungsvorrichtung (10) nach irgendeinem der voranstehenden Ansprüche, wobei die zentrale Schicht (104) aus einer Baumwoll- und / oder Bambuseinlage geformt ist.

12. Verwendung einer Frischwarenaufbewahrungsvorrichtung (10) nach irgendeinem der voranstehenden Ansprüche, wobei die äußere Schicht (106) aus einem Musselin- oder Kalikostoff geformt ist.

13. Verwendung einer Frischwarenaufbewahrungsvorrichtung (10) nach irgendeinem der voranstehenden Ansprüche, wobei die Verwendung weiterhin das Begießen der Speichervorrichtung (10) mit Wasser und das Platzieren der Speichervorrichtung (10) in einen Kühlschrank umfasst.

14. Verwendung nach Anspruch 13, weiterhin umfassend den Schritt:
Rollen der Speichervorrichtung (10) in eine gerollte Gestaltung mit dem zweiten Tuch auf der Innenseite vor dem Platzieren der Speichervorrichtung (10) in den Kühlschrank.

15. Verwenden nach Anspruch 13 oder 14, weiterhin umfassend den Schritt:
Intermittierendes Befeuchten der Speichervorrichtung (10) mit Wasser zum Nachfüllen von Wasser in die zentrale Schicht (104) der Speichervorrichtung (10).

## Revendications

1. Utilisation d'un dispositif de stockage de produits frais (10) pour contenir un produit frais comprenant des herbes, des fruits ou des légumes, le dispositif de stockage de produits frais (10) ayant une poche (16) avec une ouverture (22) pour recevoir ledit produit frais, la poche (16) étant formée, au moins en partie, d'une feuille en matériau composite (100) comprenant :
une couche interne (102) formée d'un matériau perméable à l'eau ;
une couche centrale (104) formée d'une ouate absorbant l'eau ; et
une couche extérieure (106),
**caractérisé en ce que**
- la feuille en matériau composite (100) comprend en outre : au moins une deuxième couche interne formée d'un matériau perméable à l'eau, et
- la couche extérieure (106) est formée d'un matériau perméable à l'eau.

2. Utilisation d'un dispositif de stockage de produits frais (10) selon la revendication 1, dans laquelle la poche (16) est formée d'une première feuille (12) fixée à une deuxième feuille (14), au moins une des première et deuxième feuilles (12, 14) comprenant ladite feuille composite (100).

3. Utilisation d'un dispositif de stockage de produits frais (10) selon la revendication 2, dans laquelle les première et deuxième feuilles (12, 14) comprennent toutes deux lesdites feuilles composites (100).

4. Utilisation d'un dispositif de stockage de produits frais (10) selon la revendication 2 ou 3, dans laquelle la première feuille (12) et la deuxième feuille (14) sont généralement rectangulaires et sont fixées le long de trois bords communs (18, 20) pour former une poche rectangulaire (16).

5. Utilisation d'un dispositif de stockage de produits frais (10) selon l'une quelconque des revendications 2 à 4, comprenant en outre une partie de volet (26) formée d'un matériau perméable à l'eau, la partie de volet (26) s'étendant depuis une extrémité de la première feuille (12) et adaptée pour fermer sensiblement l'ouverture (22) de la poche (16).

6. Utilisation d'un dispositif de stockage de produits frais (10) selon la revendication 5, dans laquelle le dispositif de stockage (10) est adapté pour être enroulé en une configuration enroulée avec la deuxième feuille (14) à l'intérieur, la partie de volet (26) étant adaptée pour s'enrouler circonférentiellement autour du dispositif de stockage (10) selon la configuration enroulée.

7. Utilisation d'un dispositif de stockage de produits frais (10) selon la revendication 6, comprenant en outre un mécanisme de fixation (28) adapté pour fixer le dispositif de stockage (10) dans la configuration enroulée.

8. Utilisation d'un dispositif de stockage de produits frais (10) selon la revendication 7, dans laquelle le mécanisme de fixation (28) comprend une ou plusieurs sangles (28) adaptées pour envelopper le dispositif de stockage (10) dans la configuration enroulée.

9. Utilisation d'un dispositif de stockage de produits frais (10) selon l'une quelconque des revendications précédentes, dans laquelle l'ouverture (22) de la poche (16) s'étend sensiblement sur la largeur de la poche (16).

10. Utilisation d'un dispositif de stockage de produits frais (10) selon l'une quelconque des revendications précédentes, dans laquelle les au moins deux couches internes (102) sont formées d'étamine.

11. Utilisation d'un dispositif de stockage de produits frais (10) selon l'une quelconque des revendications précédentes, dans laquelle la couche centrale (104) est formée d'ouate de coton et/ou de bambou.

12. Utilisation d'un dispositif de stockage de produits frais (10) selon l'une quelconque des revendications précédentes, dans laquelle la couche extérieure (106) est formée d'un tissu de mousseline ou de calicot.

13. Utilisation d'un dispositif de stockage de produits frais (10) selon l'une quelconque des revendications précédentes, dans laquelle l'utilisation comprend en outre l'arrosage du dispositif de stockage (10) avec de l'eau, et le placement du dispositif de stockage (10) dans un réfrigérateur.

14. Utilisation d'un dispositif de stockage de produits frais (10) selon la revendication 13, comprenant en outre l'étape consistant à :
rouler le dispositif de stockage (10) en une configuration enroulée avec la deuxième feuille à l'intérieur avant de placer le dispositif de stockage (10) dans le réfrigérateur.

15. Utilisation d'un dispositif de stockage de produits frais (10) selon la revendication 13 ou 14, comprenant en outre l'étape consistant à :
humidifier de manière intermittente le dispositif de stockage (10) avec de l'eau pour remplir d'eau la couche centrale (104) du dispositif de stockage (10).
